# EUROPEAN PATENT APPLICATION

(11) **EP 4 782 944 A1**
(43) Date of publication of application: **29.07.2026**
(21) Application number: 26153647.8
(22) Date of filing: 22.01.2026
(51) Int. Cl.: G05B 19/4097, G05B 19/418

(54) **COMPUTER SYSTEM AND METHOD FOR PRODUCTION AUTOMATION**

(30) Priority: 27.01.2025 US 202563750199 P
(71) Applicant: Reko Automation Group Inc., Lakeshore, ON N8N 4W2 (CA)
(72) Inventor: WATSON, Benjamin, Lakeshore, N8N 4W2 (CA); BELLEMORE, Nicholas, Lakeshore, N8N 4W2 (CA); MENDONCA, Michael, Lakeshore, N8N 4W2 (CA); Di FAZIO, Jason, Lakeshore, N8N 4W2 (CA); LANE, Cooper, Lakeshore, N8N 4W2 (CA); FUERTH, Justin, Lakeshore, N8N 4W2 (CA)
(74) Representative: Humphrey-Evans, Edward John

(57) **Abstract**

A system and method for production automation is provided herein. The system includes an equipment for manufacturing; and a processing server in communication with the equipment. The processing server includes a file configuration module configured for importing a model file into a user interface environment, the model file including specifications for an end-product; and validating the model file to ensure the equipment is able to manufacture the end-product. The processing server further includes a production configuration module configured for providing custom selection of operation sequences to be included in a production process; and providing a guided interface to create the production process including the selected operation sequences. The processing server further includes a generation module configured for generating a complete production process based on the model file and the production process; and providing the complete production process to the equipment for production of the end-product.

## Description

### Technical Field

The following relates generally to custom manufacturing and assembly, and more particularly to systems and methods for end-product agnostic production automation.

### Introduction

From the industrial revolution to present times, automation has continued to advance and create opportunities for achieving greater efficiency in manufacturing.

However, in custom manufacturing, unique products are usually only produced on custom automation equipment when high volume production or manual assembly are required. A variety of factors currently make it very difficult to produce low-volume, high-mix components using production automation, without requiring special design software.

For example, as software and hardware may generally belong to different ecosystems, one piece of software may not typically be compatible with hardware from a different manufacturer, and vice versa. As a result, users may not be able to design a product in the design software of their choice, while also have the product be produced on the hardware of their choice.

Further, the complexities of special design software may make it exceedingly difficult for non-technical personnel having little to no automation knowledge to generate the program data for custom manufacturing. This too limits access to such techniques to a select few.

Accordingly, there is a need for an improved system and method for production automation that overcomes at least some of the disadvantages of existing systems and methods.

This background information is provided to reveal information believed by the applicant to be of possible relevance to the present disclosure. No admission is necessarily intended, nor should be construed, that any of the preceding information constitutes prior art against the present disclosure.

### Summary

A system for production automation is provided. The system includes an equipment for manufacturing, and a processing server in communication with the equipment. The processing server includes a file configuration module, a production configuration module, and a generation module. The file configuration module is configured for importing a model file into a user interface environment, wherein the model file includes specifications for an end-product, and validating the model file to ensure the equipment is able to manufacture the end-product. The production configuration module is configured for providing custom selection of operation sequences to be included in a production process, providing a guided interface to create the production process including the selected operation sequences. The generation module is configured for generating a complete production process based on the model file and the production process, and providing the complete production process to the equipment for production of the end-product.

In an embodiment, the file configuration module is further configured for at least one of simplifying geometry in the model file; and setting a correct positioning in the model file for production.

In an embodiment, generating the complete production process includes at least one of generating an equipment program path; generating work-holding data; and generating control parameters for the equipment.

In an embodiment, wherein the model file includes at least one of a computer aided design (CAD) file; a RVT file; a STEP file; and an IGES 3D file.

In an embodiment, simplifying geometry in the model file includes at least one of selecting the model file; modifying the model file; removing elements in the model file; and merging elements in the model file.

In an embodiment, setting a correct positioning for operation sequences includes at least one of setting an origin point in the model file; and manipulating elements of the model file.

In an embodiment, validating the model file includes at least one of validating an allowable geometry; and validating material constraints.

In an embodiment, custom selection of operation sequences further includes assigning the selected operation sequences to specific components in the model file.

In an embodiment, the equipment program path is at least one of interference-free; and provided to the equipment.

In an embodiment, the control parameters include data relating to at least one of sequencing the equipment; material loading; and the work-holding data.

In an embodiment, the complete production process is viewable as a simulation in the user interface environment for at least one of estimating cycle time; and providing a visual reference of all operation sequences included.

In an embodiment, the equipment includes at least one robot for manufacturing.

A method of production automation is provided. The method includes importing a model file into a user interface environment, wherein the model file includes specifications for an end-product to be produced on an equipment for manufacturing; validating the model file to ensure the equipment is able to manufacture the end-product; providing custom selection of operation sequences to be included in a production process; providing a guided interface to create the production process including the selected operation sequences; generating a complete production process based on the model file and the production process; and providing the complete production process to the equipment for production of the end-product.

In an embodiment, the method further includes at least one of simplifying geometry in the model file; and setting a correct positioning in the model file for production.

In an embodiment, generating the complete production process includes at least one of generating an equipment program path; generating work-holding data; and generating control parameters for the equipment.

In an embodiment, wherein the model file includes at least one of a computer aided design (CAD) file; a RVT file; a STEP file; and an IGES 3D file.

In an embodiment, simplifying geometry in the model file includes at least one of selecting the model file; modifying the model file; removing elements in the model file; and merging elements in the model file.

In an embodiment, setting a correct positioning for operation sequences includes at least one of setting an origin point in the model file; and manipulating elements of the model file.

In an embodiment, validating the model file includes at least one of validating an allowable geometry; and validating material constraints.

In an embodiment, custom selection of operation sequences further includes assigning the selected operation sequences to specific components in the model file.

In an embodiment, the equipment program path is at least one of interference-free; and provided to the equipment.

In an embodiment, the control parameters include data relating to at least one of sequencing the equipment; material loading; and the work-holding data.

In an embodiment, the complete production process is viewable as a simulation in the user interface environment for at least one of estimating cycle time; and providing a visual reference of all operation sequences included.

In an embodiment, the equipment includes at least one robot for manufacturing.

A device for production automation is provided. The device includes a network interface, a processor, and a non-transitory computer readable memory having stored thereon instructions that, when executed by the processor, configure the device for: importing a model file into a user interface environment, wherein the model file includes specifications for an end-product to be produced on an equipment for manufacturing; validating the model file to ensure the equipment is able to manufacture the end-product; providing custom selection of operation sequences to be included in a production process; providing a guided interface to create the production process including the selected operation sequences; generating a complete production process based on the model file and the production process; and providing the complete production process to the equipment for production of the end-product.

In an embodiment, wherein the device is further configured for at least one of simplifying geometry in the model file; and setting a correct positioning in the model file for production.

In an embodiment, generating the complete production process includes at least one of generating an equipment program path; generating work-holding data; and generating control parameters for the equipment.

In an embodiment, wherein the model file includes at least one of a computer aided design (CAD) file; a RVT file; a STEP file; and an IGES 3D file.

In an embodiment, simplifying geometry in the model file includes at least one of selecting the model file; modifying the model file; removing elements in the model file; and merging elements in the model file.

In an embodiment, setting a correct positioning for operation sequences includes at least one of setting an origin point in the model file; and manipulating elements of the model file.

In an embodiment, validating the model file includes at least one of validating an allowable geometry; and validating material constraints.

In an embodiment, custom selection of operation sequences further includes assigning the selected operation sequences to specific components in the model file.

In an embodiment, the equipment program path is at least one of interference-free; and provided to the equipment.

In an embodiment, the control parameters include data relating to at least one of sequencing the equipment; material loading; and the work-holding data.

In an embodiment, the complete production process is viewable as a simulation in the user interface environment for at least one of estimating cycle time; and providing a visual reference of all operation sequences included.

In an embodiment, the equipment includes at least one robot for manufacturing.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of an example system for production automation, according to an embodiment;
Figure 2 is a flowchart of an example method of production automation, according to an embodiment;
Figure 3 is schematic diagram of an example device for production automation, according to an embodiment;
Figure 4 is a schematic diagram of an example electronic device, according to an embodiment;
Figure 5 is a schematic diagram of another example system for production automation, according to an embodiment;
Figures 6A, 6B, and 6C are a flowchart of data and components in an example system for production automation, according to an embodiment;
Figures 7A, 7B and 7C are example images of production automation, according to an embodiment; and
Figures 8A and 8B are images of an example interface for production automation, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

As used herein, the term "about" should be read as including variation from the nominal value, for example, a +/-10% variation from the nominal value. It is to be understood that such a variation is always included in a given value provided herein, whether or not it is specifically referred to.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present disclosure.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to custom manufacturing and assembly, and more particularly to systems and methods for end-product agnostic production automation.

Techniques disclosed herein provide for a highly flexible, end-product agnostic software which addresses needs of the offsite construction industry. Such needs are currently unmet by existing major equipment suppliers. This software allows non-technical personnel with little to no automation knowledge to generate all the program data necessary to produce low-volume, high-mix components using production automation without requiring special design software.

Advantageously, techniques disclosed herein allow for unique products to be produced on custom automation equipment that would normally be reserved only for high volume production or require manual assembly. This provides the flexibility to be used with custom automation equipment and allows users to design their product in the design software of their choice. The present disclosure enables extremely flexible production in the best possible timeframe by leveraging the benefits of automation built specifically for a customer/product need and bridges the gap between existing path and sequence generation software and the need for these software interfaces to be simpler, more intuitive, and more customer product oriented.

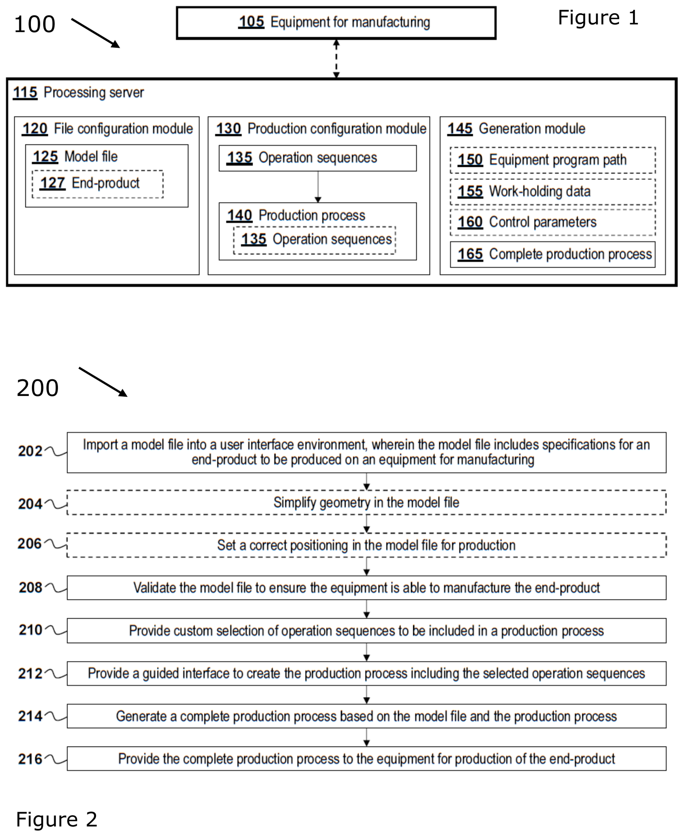

Referring now to Figure 1, shown therein is an example system 100 for production automation, according to an embodiment of the present disclosure.

The system 100 includes an equipment 105 for manufacturing. For clarity of illustration, only a single equipment 105 is shown, but it will be appreciated that the system 100 may include any number of equipment 105, e.g., a plurality of equipment 105.

The system 100 further includes a processing server 115 in communication with the equipment 105.

The processing server 115 includes a file configuration module 120.

The file configuration module 120 is configured for importing a model file 125 into a user interface environment.

The model file includes specifications for an end-product 127.

In an embodiment, the file configuration module 120 may be further configured for simplifying geometry in the model file 125.

In an embodiment, the file configuration module 120 may be further configured for setting a correct positioning in the model file 125 for production.

The file configuration module 120 is further configured for validating the model file 125 to ensure the equipment 105 is able to manufacture the end-product 127.

The processing server 115 further includes a production configuration module 130.

The production configuration module 130 is configured for providing custom selection of operation sequences 130 to be included in a production process 140.

The production configuration module 130 is further configured for providing a guided interface to create the production process 140 including the selected operation sequences 135.

The production configuration module 130 has different components to allow it to work efficiently. It is able to create a hub to allow different pieces of software to communicate.

Advantageously, the production configuration module 130 is tailored to each application, and defaults to automatically pick up on how to sequence elements in different applications.

This functionality may be combined with code blocks that can be customized.

The processing server 115 further includes a generation module 145.

The generation module 145 is configured for generating a complete production process 165 based on the model file 125 and the production process 140.

In an embodiment, generating the complete production process 165 includes at least one of generating an equipment program path 150, generating work-holding data 155, and generating control parameters 160 for the equipment 105.

In various embodiments, generating the complete production process 165 includes detecting possible collisions during the production process 140.

In various embodiments, generating the complete production process 165 includes the use of artificial intelligence (AI), such as, for example, Al specialized to be used in the detection of mechanical parts.

The generation module 145 is configured for providing the complete production process 165 to the equipment 105 for production of the end-product 127.

In an embodiment, the model file 125 includes at least one of a computer aided design (CAD) file, a RVT file, a STEP file, and an IGES 3D file.

In an embodiment, simplifying geometry in the model file 125 includes at least one of selecting the model file 125, modifying the model file 125, removing elements in the model file 125, and merging elements in the model file 125.

In some embodiments, where a model file 125 may have been prepared correctly, no further manipulation or simplification may be necessary.

In an embodiment, setting a correct positioning for operation sequences includes at least one of setting an origin point in the model file, and manipulating elements of the model file 125.

In an embodiment, validating the model file 125 includes at least one of validating an allowable geometry, and validating material constraints.

In an embodiment, custom selection of operation sequences further includes assigning the selected operation sequences to specific components in the model file 125.

In an embodiment, the equipment program path 150 is at least one of interference-free, and provided to the equipment 105.

In an embodiment, the control parameters 160 include data relating to at least one of sequencing the equipment, material loading, and the work-holding data.

In an embodiment, the complete production process is viewable as a simulation in the user interface environment for at least one of estimating cycle time, and providing a visual reference of all operation sequences included.

In an embodiment, the equipment 105 includes at least one robot.

It will be reasonably appreciated that in embodiments where a robot is included, aspects relating to the equipment 105, may similarly relate to robot. For example, there may be a robot program path, analogous to an equipment program path 150, and robot(s) may be sequenced similar to sequencing of the equipment.

Advantageously, techniques disclosed herein may be applied to a variety of industries including materials handling, dispensing of one and two part adhesives, tape, fastening (screwdriving, riveting, nailing), welding, saw cutting and milling.

Referring now to Figure 2, shown therein is a method 200 of production automation, according to an embodiment of the present disclosure.

The method 200 may be encoded as computer-executable instructions and executed by one or more computing devices comprising one or more processors. In an embodiment, the method 200 may be executed by the system 100 of Figure 1.

At 202, the method 200 includes importing a model file into a user interface environment.

The model file includes specifications for an end-product to be produced on an equipment for manufacturing.

At 204, the method 200 may further include simplifying geometry in the model file.

At 206, the method 200 may further include setting a correct positioning in the model file for production.

At 208, the method 200 further includes validating the model file to ensure the equipment is able to manufacture the end-product.

At 210, the method 200 further includes providing custom selection of operation sequences to be included in a production process.

At 212, the method 200 further includes providing a guided interface to create the production process including the selected operation sequences.

At 214, the method 200 further includes generating a complete production process based on the model file and the production process.

At 216, the method 200 further includes providing the complete production process to the equipment for production of the end-product.

In an embodiment, the model file includes at least one of a computer aided design (CAD) file, a RVT file, a STEP file, and an IGES 3D file.

In an embodiment, generating the complete production process includes at least one of generating an equipment program path, generating work-holding data, and generating control parameters for the equipment.

In various embodiments, generating the complete production process includes detecting possible collisions during the production process.

In various embodiments, generating the complete production process includes the use of artificial intelligence (AI), such as, for example, Al specialized to be used in the detection of mechanical parts.

In an embodiment, simplifying geometry in the model file includes at least one of selecting the model file, modifying the model file, removing elements in the model file, and merging elements in the model file.

In some embodiments, where a model file may have been prepared correctly, no further manipulation or simplification may be necessary.

In an embodiment, setting a correct positioning for operation sequences includes at least one of setting an origin point in the model file, and manipulating elements of the model file.

In an embodiment, validating the model file includes at least one of validating an allowable geometry, and validating material constraints.

In an embodiment, custom selection of operation sequences further includes assigning the selected operation sequences to specific components in the model file.

In an embodiment, the equipment program path is at least one of interference-free, and provided to the equipment.

In an embodiment, the control parameters include data relating to at least one of sequencing the equipment, material loading, and the work-holding data.

In an embodiment, the complete production process is viewable as a simulation in the user interface environment for at least one of estimating cycle time, and providing a visual reference of all operation sequences included.

In an embodiment, the equipment includes at least one robot.

It will be reasonably appreciated that in embodiments where a robot is included, aspects relating to the equipment, may similarly relate to robot. For example, there may be a robot program path, analogous to an equipment program path, and robot(s) may be sequenced similar to sequencing of the equipment.

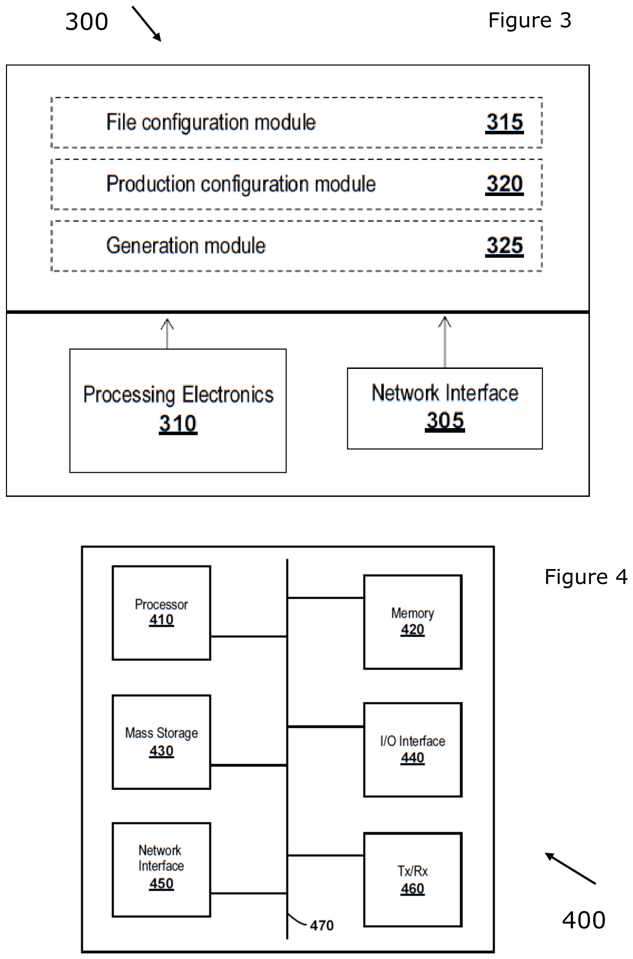

Referring now to Figure 3, shown therein is an example device 300 for production automation, according to an embodiment of the present disclosure.

In various embodiments, the device 300 may be used, for example, to implement processing servers disclosed herein such as, for example, the processing server 115 of Figure 1.

The device 300 includes a network interface 305 and processing electronics 310.

The processing electronics 310 can include a computer processer executing program instructions stored in memory, or other electronics components such as digital circuitry, including for example FPGAs and ASICs.

The network interface 305 can include an optical communication interface, a copper cable, or radio communication interface, such as a transmitter and receiver.

In various embodiments, the device 300 may further include, without limitation, a file configuration module 315, a production configuration module 320, and a generation module 325.

According to certain embodiments, any or all of the depicted elements may be utilized, or only a subset of the elements. Further, the device 300 may contain multiple instances of certain elements, such as, for example, multiple file configuration modules 315.

The device 300 may include several other components, each of which is partially or fully implemented using the underlying processing electronics 310 and, where applicable, the network interface 305.

Referring now to Figure 4, shown therein is a schematic diagram of an example electronic device 400 that may perform any or all of operations of the above methods and features explicitly or implicitly described herein, according to an embodiment.

For example, a computer equipped with network function may be configured as electronic device 400. The electronic device 400 may be used to implement the device 300 for production automation of Figure 3, for example.

As shown, the device includes a processor 410, such as a Central Processing Unit (CPU) or specialized processors such as a Graphics Processing Unit (GPU) or other such processor unit, memory 420, non-transitory mass storage 430, I/O interface 440, network interface 450, and a transceiver 460, all of which are communicatively coupled via bi-directional bus 470.

According to certain embodiments, any or all of the depicted elements may be utilized, or only a subset of the elements. Further, the device 400 may contain multiple instances of certain elements, such as multiple processors 410, memories 420, or transceivers 460. Also, elements of the hardware device may be directly coupled to other elements without the bi-directional bus.

Additionally, or alternatively to a processor 410 and memory 420, other electronics, such as integrated circuits, may be employed for performing the required logical operations.

The memory 420 may include any type of non-transitory memory such as static random-access memory (SRAM), dynamic random-access memory (DRAM), synchronous DRAM (SDRAM), read-only memory (ROM), any combination of such, or the like.

The mass storage element 430 may include any type of non-transitory storage device, such as a solid-state drive, hard disk drive, a magnetic disk drive, an optical disk drive, USB drive, or any computer program product configured to store data and machine executable program code.

According to certain embodiments, the memory 420 or mass storage 430 may have recorded thereon statements and instructions executable by the processor 410 for performing any of the aforementioned method operations described above.

For example, the electronic device 400 may be configured for: importing a model file into a user interface environment, wherein the model file includes specifications for an end-product to be produced on an equipment for manufacturing; validating the model file to ensure the equipment is able to manufacture the end-product; providing custom selection of operation sequences to be included in a production process; providing a guided interface to create the production process including the selected operation sequences; generating a complete production process based on the model file and the production process; and providing the complete production process to the equipment for production of the end-product.

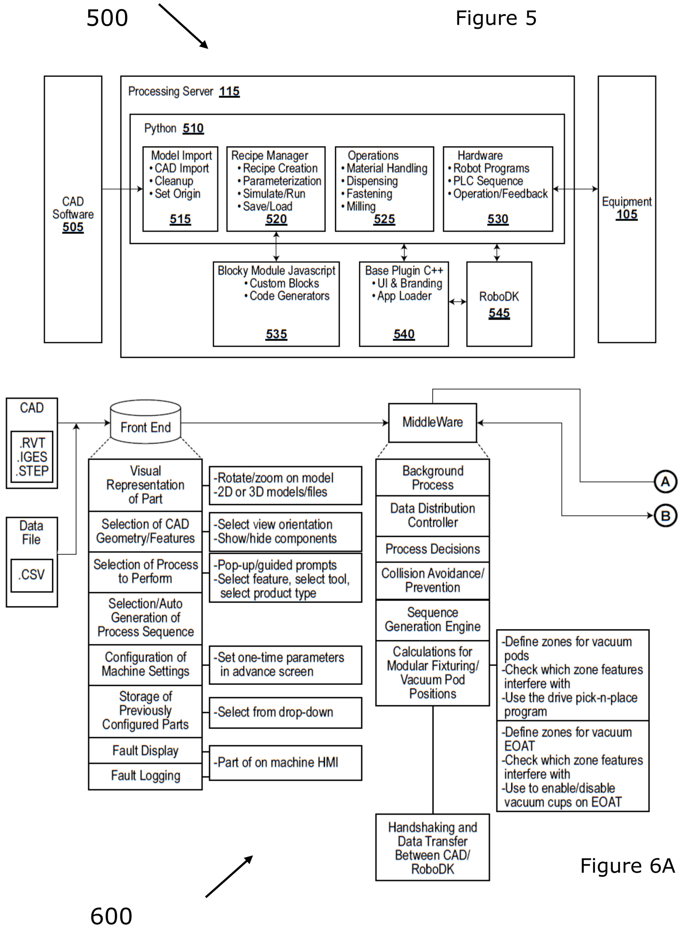

Referring now to Figure 5, shown therein is another example system 500 for production automation, according to an embodiment of the present disclosure.

The system 500 may be a specialized or generalized version of the system 100 of Figure 1.

The system 500 includes CAD software 505, the processing server 115, and the equipment 105.

The processing server 115 includes an environment 510 (e.g., created in the Python programming language).

The environment 510 includes a model import module 515, a recipe manager module 520, an operations module 525, and a hardware interface module 530.

The model import module 515 is configured to import CAD files from the CAD software 505, clean up the files, and set an origin in the files for production.

The recipe manager module 520 is configured to create recipes for the production, handle parameterization, handle simulations and execution of the system, and handle saving and loading aspects.

The operations module 525 is configured to handle material aspects, dispensing aspects, fastening (work-hold) aspects, and milling aspects.

The hardware interface module 530 is configured to handle robot programs, PLC sequencing, and operation/feedback aspects.

The hardware interface module 530 also communicated with the equipment 105.

A JavaScript Blockly module 535 is in communication with the recipe manager module 520 to create custom blocks and generate code.

A C++ Base Plugin 540 is depicted as being in communication with the operations module 525. The base plugin 540 may be used for user interface and branding, and as an application loader.

A RoboDK module 545 is depicted as being in communication with the hardware interface module 530.

In various embodiments, the RoboDK module 545 may also be used to generate equipment paths and/or robot paths.

The base plugin 540 and RoboDK module 545 may further be in communication with one another.

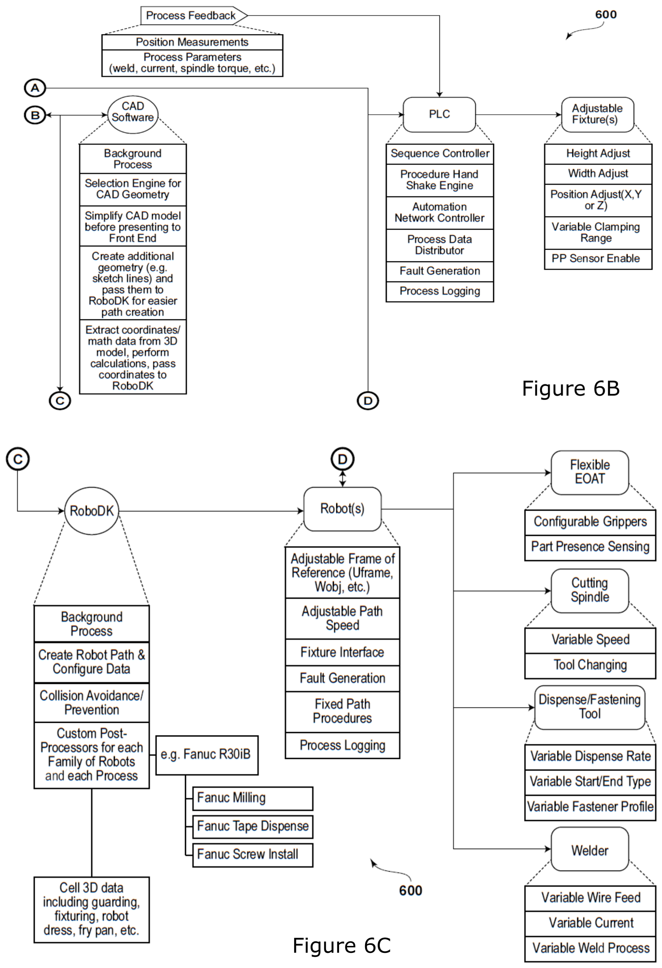

Referring now to Figures 6A, 6B, and 6C, shown therein is an example flowchart 600 of data and components in an example system for production automation, according to an embodiment of the present disclosure.

The flowchart 600 may be encoded as computer-executable instructions and executed by one or more computing devices comprising one or more processors. In an embodiment, the flowchart 600 may be executed by the system 100 of Figure 1, or the system 500 of Figure 5.

The flowchart 600 depicts various types of data which may flow through system 100 or system 500, various steps which may be carried out by different components, as well as the different components themselves.

According to various embodiments, any or all of the depicted elements may be utilized, or only a subset of the elements. Further, there may be multiple instances of certain elements of the flowchart 600. Also, various elements may be directly coupled to other elements even if they may not be depicted as such in the flowchart 600.

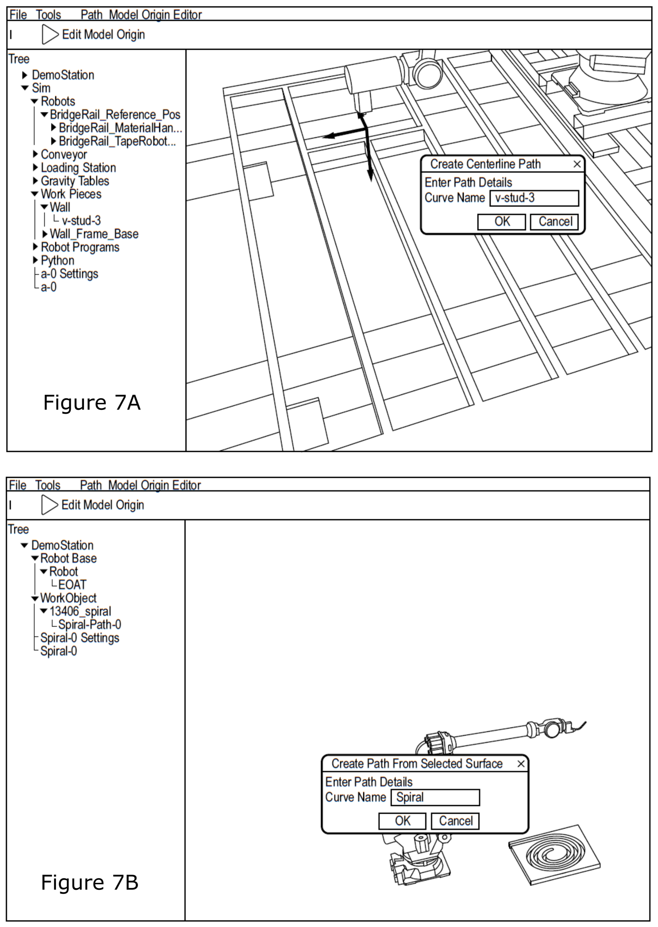

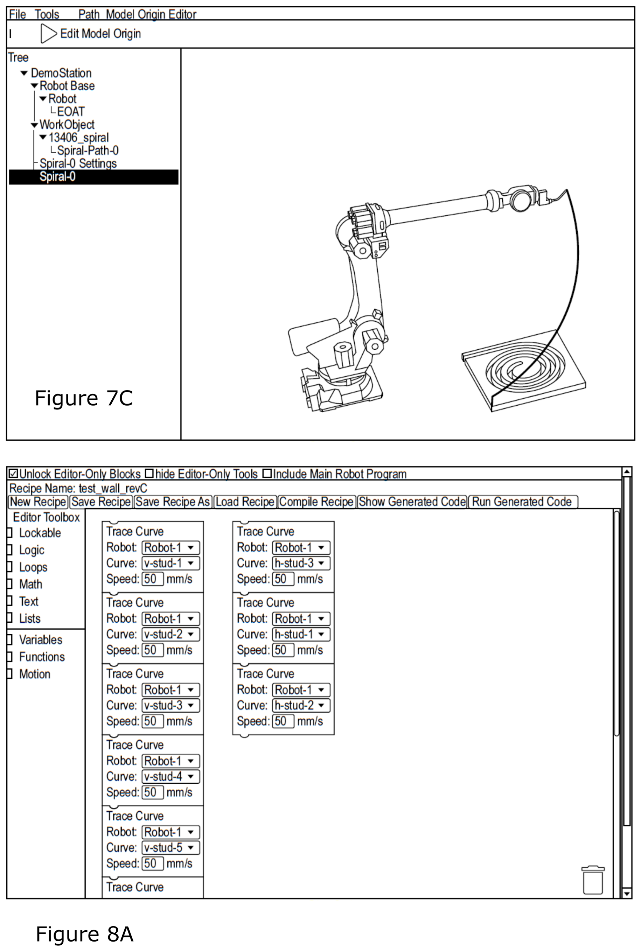

Referring now to Figures 7A, 7B, and 7C, shown therein are example images of production automation, according to an embodiment of the present disclosure.

Figure 7A depicts the prompt for entering a path name after centerline geometry has been selected.

Figure 7B depicts the prompt for entering a path name after surface perimeter geometry has been selected.

Figure 7C depicts the path that is generated after selection.

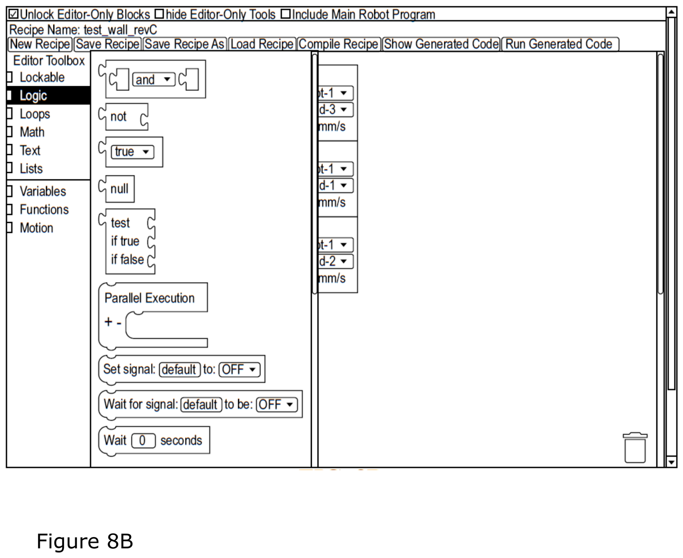

Referring now to Figures 8A and 8B, shown therein are images of an example interface for production automation, according to an embodiment of the present disclosure.

Figure 8A depicts an example recipe manager module, such as for example, the recipe manager module 520 of Figure 5. In Figure 8A, the sequencing to tasks is depicted.

Figure 8B depicts an example toolbox which may be used to modify or finetune tasks.

While the above description provides examples of one or more apparatus, methods, or systems, it will be appreciated that other apparatus, methods, or systems may be within the scope of the claims as interpreted by one of skill in the art.

Elements of each embodiment may be incorporated into other embodiments, for example, configurations discussed in relation to one embodiment, may be applied to other embodiments disclosed herein.

Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present disclosure.

## Claims

1. A system for production automation (100, 500), the system comprising:
an equipment (105) for manufacturing;
a processing server (115) in communication with the equipment, the processing server comprising:
a file configuration module (120) configured for:
importing a model file (125) into a user interface environment, wherein the model file includes specifications for an end-product;
validating the model file to ensure the equipment is able to manufacture the end-product;
a production configuration module (130) configured for:
providing custom selection of operation sequences to be included in a production process (140);
providing a guided interface to create the production process (140) including the selected operation sequences (135);
a generation module (145) configured for:
generating a complete production process (165) based on the model file and the production process; and
providing the complete production process to the equipment for production of the end-product.

2. The system of claim 1, wherein the file configuration module is further configured for at least one of: simplifying geometry in the model file; and setting a correct positioning in the model file for production.

3. The system of claim 1, wherein generating the complete production process includes at least one of: generating an equipment program path (150); generating work-holding data (155); and generating control parameters (160) for the equipment (105).

4. The system of claim 1, wherein the model file (125) includes at least one of: a computer aided design (CAD) file; a RVT file; a STEP file; and an IGES 3D file.

5. The system of claim 2, wherein simplifying geometry in the model file (125) includes at least one of: selecting the model file (125); modifying the model file (125); removing elements in the model file (125); and merging elements in the model file (125).

6. **The** system of claim 2, wherein setting a correct positioning for operation sequences includes at least one of: setting an origin point in the model file (125); and manipulating elements of the model file.

7. **The** system of claim 1, wherein validating the model file (125) includes at least one of: validating an allowable geometry; and validating material constraints.

8. **The** system of claim 1, wherein custom selection of operation sequences further includes assigning the selected operation sequences to specific components in the model file (125).

9. **The** system of claim 3, wherein the equipment program path (150) is at least one of: interference-free; and provided to the equipment.

10. **The** system of claim 3, wherein the control parameters (160) include data relating to at least one of: sequencing the equipment; material loading; and the work-holding data.

11. **The** system of claim 1, wherein the complete production process is viewable as a simulation in the user interface environment for at least one of: estimating cycle time; and providing a visual reference of all operation sequences included.

12. **The** system of claim 1, wherein the equipment includes at least one robot for manufacturing.

13. A method of production automation (200), the method comprising:
importing (202) a model file (125) into a user interface environment, wherein the model file includes specifications for an end-product to be produced on an equipment for manufacturing;
validating (208) the model file to ensure the equipment is able to manufacture the end-product;
providing (210) custom selection of operation sequences to be included in a production process;
providing a guided interface (212) to create the production process including the selected operation sequences;
generating a complete production process (214) based on the model file and the production process; and
providing the complete production process (216) to the equipment for production of the end-product.

14. **The** method of claim 13, further including at least one of: simplifying geometry (204) in the model file; and setting a correct positioning in the model file for production.

15. The method of claim 13, wherein generating the complete production process includes at least one of: generating an equipment program path; generating work-holding data; and generating control parameters for the equipment.
